# FASCICULE DE BREVET EUROPEEN

(11) **EP 0 719 664 B1**
(45) Date de publication et mention de la délivrance du brevet: **10.03.1999**
(21) Numéro de dépôt: 95120552.5
(22) Date de dépôt: 27.12.1995
(51) Int. Cl.: B60H 1/00

(54) **Bloc de connexion centralisé pour installation de chauffage et/ou climatisation d'automobile**
Zentralisierter Verbindungsblock für eine Heizungs- und/oder Klimaanlage eines Kraftfahrzeuges
Centralised connection bloc for car heating and/or air conditioning

(30) Priorité: 29.12.1994 FR 9415893
(43) Date de publication de la demande: 03.07.1996
(73) Titulaire: VALEO CLIMATISATION, 78321 La Verrière (FR)
(72) Inventeur: Delire, Philippe, F-72000 Le Mans (FR)
(74) Mandataire: Gamonal, Didier

(56) Documents cités:
- DE-A- 1 480 095
- DE-A- 3 105 430
- DE-A- 4 032 143
- DE-U- 9 106 035

## Description

L'invention concerne les installations de chauffage et/ou climatisation à bord d'automobiles, et en particulier les câblages électriques associés à celles-ci.

Une telle installation de chauffage et/ou climatisation fait intervenir différents composants, implantés en des endroits différents. L'installation comprend pratiquement toujours un pulseur d'air, avec la ou les résistances qui permettent d'en choisir le régime, ce qui suffit pour une installation de chauffage de base, à commande manuelle ; à l'opposé, si le véhicule est équipé d'une climatisation, il s'y ajoute un ou plusieurs capteurs, en particulier une sonde d'évaporateur, et un ou plusieurs actionneurs, en particulier un micromoteur pour le volet répartiteur d'air chaud/froid. On peut encore prévoir un relais pour piloter le pulseur d'air, notamment si le combiné de commande comporte un mode de régulation automatique de la température et de la ventilation de l'habitacle.

Jusqu'à présent, les connexions entre ces différents éléments sont réalisées classiquement sous la forme de faisceaux de câbles électriques, distribués en sous-faisceaux, qui sont eux-mêmes dirigés vers les différents composants de l'appareil. A cause de la dispersion d'implantation desdits composants, il en découle d'une part un coût important pour cette connectique, et les différents faisceaux qu'elle comprend, d'autre part le fait que le montage et l'entretien de ces composants et de leurs câblages sont souvent rendus difficiles, tant pour des raisons d'accessibilité qu'à cause de la zone d'encombrement qui en résulte. A cela s'ajoute le fait que, suivant son équipement, un véhicule donné pourra avoir des câblages électriques très différents.

La présente invention a pour but d'améliorer la situation.

L'invention vise donc un dispositif de connexion pour une installation de chauffage et/ou climatisation à bord d'une automobile, comportant un pulseur d'air avec ses conduits, ainsi qu'un combiné de commande et une échelle résistive de puissance pour régler le régime du pulseur d'air. Ce dispositif comprend notamment des liaisons électriques entre le combiné de commande, le pulseur et l'échelle résistive.

Selon l'invention, le dispositif de connexion est fondé sur un bloc connecteur qui comprend une plaque, susceptible d'être montée à étanchéité périmétrique sur une paroi de conduit de l'installation, en particulier une paroi associée au pulseur d'air; la face arrière de la plaque, située côté intérieur du conduit, comporte un jeu de N plots pour la liaison à l'échelle résistive de puissance, qui est de préférence de valeurs standard, et elle-même montée sur la face arrière de la plaque; la face avant de la plaque comprend au moins deux plots, associée de préférence à un demi-connecteur deux voies (au moins), pour le branchement aux deux bornes du pulseur; cette face avant comprend aussi un jeu de broches agencées en demi-connecteur multi-voies standard (typiquement de 11 à 18 voies, en particulier 15 voies) pour recevoir un faisceau électrique à relier au combiné, et regroupant toutes les fonctions de commande et de contrôle ; enfin, la plaque loge également des interconnexions prédéfinies entre broches et plots, ces interconnexions comprenant des liaisons, avec traversée étanche de la plaque, entre les plots de l'échelle résistive et des broches respectives du demi-connecteur multi-voies, ainsi que des liaisons des plots d'alimentation du pulseur respectivement avec un plot extrême de l'échelle résistive et avec une broche du demi-connecteur multi-voies.

Cette disposition, qui va à l'encontre des habitudes, s'est néanmoins avérée très intéressante, même si le demi-connecteur multi-voies et/ou l'échelle résistive sont sous-utilisés, compte tenu des avantages que l'on en retire au niveau de l'encombrement, de la centralisation de la connectique, de sa meilleure accessibilité, ainsi que de la diminution du poids des faisceaux, et des coûts.

Très avantageusement, la face avant de la plaque comprend en outre au moins une paire complémentaire de broches (de préférence au moins deux paires complémentaires de broches, formant deux demi-connecteurs complémentaires susceptibles d'être reliés respectivement à un micromoteur de volet répartiteur et à une sonde d'évaporateur), et ces broches complémentaires sont également reliées à des broches du demi-connecteur multi-voies. Ainsi, le même dispositif peut servir à plusieurs version d'un même véhicule, les broches étant présentes ou non, ou bien câblées ou non, suivant son niveau d'équipement en chauffage/climatisation.

Le même dispositif peut comporter en outre au moins trois plots pour liaison aux deux bornes d'enroulement d'un relais ainsi qu'à au moins un pôle de contact de ce relais; de leur côté, les interconnexions précitées comprennent en outre des liaisons entre ces plots de relais et des broches du demi-connecteur multi-voies, ainsi qu'une liaison entre l'autre extrémité du contact et l'un des plots de pulseur, ce qui permet l'actionnement par relais du pulseur. De préférence, les plots de relais traversent la plaque à étanchéité, tandis que le relais est monté sur la face arrière de la plaque.

D'autres caractéristiques et avantages de l'invention apparaîtront à l'examen de la description détaillée ci-après, ainsi que des dessins annexés, sur lesquels :
- la figure 1 est une vue schématique d'une installation de chauffage/climatisation, à laquelle peut s'appliquer le bloc de connexion selon l'invention ;
- la figure 2 est le schéma d'un mode de réalisation du bloc de connexion selon l'invention ;
- la figure 2A est une vue en coupe horizontale simplifiée selon la ligne de coupe A-A de la figure 2 ; et
- les figures 3A et 3B illustrent des variantes des interconnexions réalisées dans le bloc connecteur proposé.

Les éléments certains des dessins font partie intégrante de la description, notamment en ce qu'ils définissent des interconnexions d'une manière claire pour l'homme de métier.

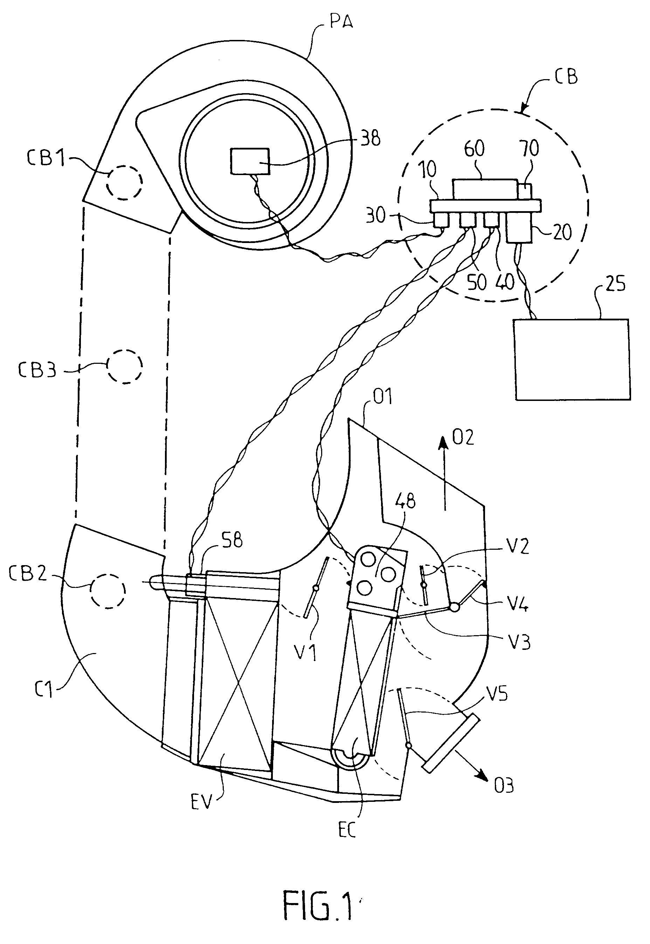

Sur la figure 1, le corps de chauffage/climatisation est partiellement éclaté, en ce sens que le pulseur d'air PA est séparé du reste, qui comprend une conduite d'entrée C1 allant vers un évaporateur EV muni d'une sonde 58, et suivi d'un échangeur de chaleur EC. La sortie directe d'air froid depuis l'espace compris entre l'évaporateur EV et l'échangeur EC est contrôlé par un volet V1. Si celui-ci laisse passer l'air, il peut être transmis directement à la sortie O1 vers des bouches d'aération placées au niveau de la figure des passagers. L'air froid peut également contourner l'échangeur EC, de façon contrôlée par la position du volet V2. Un volet V3 autorise ou non l'air à contourner l'échangeur EC. Des volets V4 et V5 permettent de commander le passage d'air vers la sortie O2 qui remonte vers le pare-brise, ainsi que vers la sortie O3 qui va vers les pieds des passagers.

Certains au moins de ces volets, par exemple les volets V1 et V2, sont sous le contrôle d'un micromoteur 48, qui les actionne par un mécanisme à galets ou tringles (non représenté).

Le pulseur d'air PA contient un moteur muni d'un bornier 38. L'installation comprend encore un combiné de commandes 25, illustré schématiquement sur la figure 1. Ce combiné comprend d'une part les commandes manuelles disponibles pour les passagers, d'autres part des fonctions automatiques, le cas échéant.

Le bloc de connexion selon l'invention, illustré de façon un peu agrandie pour une meilleure compréhension, comprend d'une manière générale une plaque 10, avec d'un côté de celle-ci une échelle résistive 60, de l'autre des connecteurs. Il s'y ajoute, le cas échéant, un relais 70.

Cette plaque 10 est implantée sur une paroi de l'installation dont la face interne est soumise à un flux d'air frais ou froid, de préférence près du pulseur. Ainsi, la zone agrandie CB de la figure 1 peut se trouver en CB1 (volute de sortie du pulseur), en CB2 (conduite amont C1 de l'évaporateur), éventuellement en CB3 (dans un conduit de liaison qui serait prévu entre le pulseur PA et la conduite C1), ou même dans une zone froide en aval de l'évaporateur (cas non représenté).

De l'autre côté de la plaque, il est prévu un connecteur multi-voies 20, de type standard, possédant typiquement de 11 à 18 voies, et assurant l'ensemble des liaisons de commande et de contrôle entre le bloc de connexion et l'unité ou combiné 25. La même face comporte un demi-connecteur 30, destiné à la liaison aux deux pôles du bornier 38 du moteur du pulseur d'air PA. Le cas échéant, s'y ajoutent deux autres demi-connecteurs 40 et 50, à deux fils chacun, et connectés respectivement au micromoteur 48 et à la sonde d'évaporateur 58.

La plaque 10 est destinée à être fixée à un endroit dégagé de la volute du pulseur d'air PA, avec dans le flux d'air l'échelle résistive 60 et le relais 70 s'il est présent.

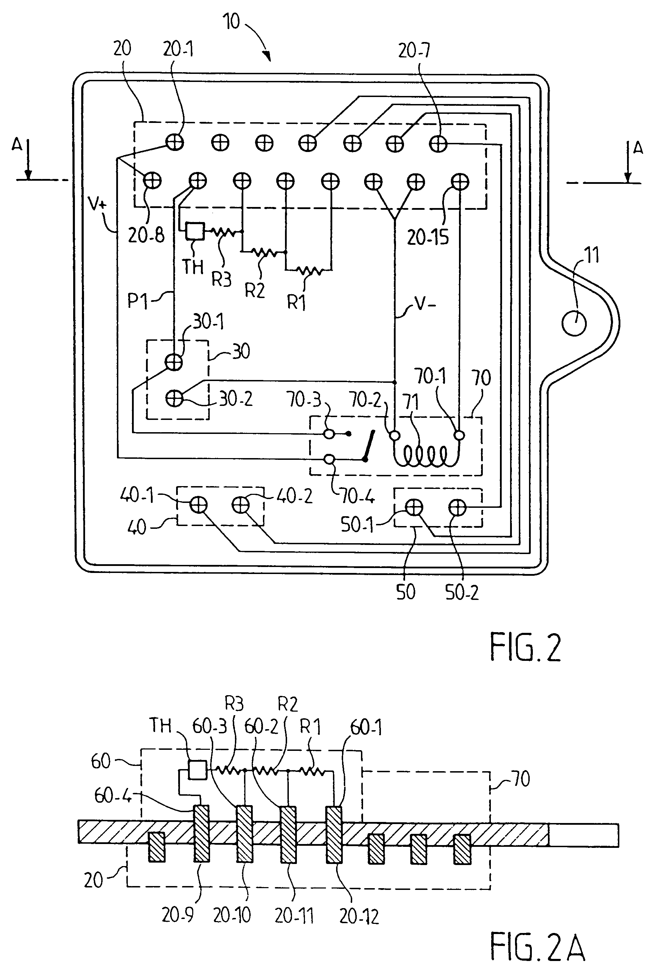

Il est maintenant fait référence à la figure 2. Sur celle-ci, les broches tournées vers l'avant sont illustrées par un cercle contenant une croix (ou signe "+") ; les broches tournées vers l'arrière sont illustrées par un cercle simple.

La plaque 10, par exemple de forme générale rectangulaire, est munie d'un oeillet 11 pour une vis de fixation, ainsi que d'une patte (non représentée).

Cette plaque comporte tout d'abord des broches 20-1 à 20-15 (Seule une partie des broches est assortie de références numériques, pour aérer la représentation). Ces broches sont positionnées au format d'un demi-connecteur standard. A cet effet, et comme pour les autres demi-connecteurs visés ci-après, on prévoit sur la plaque une empreinte (schématisée ici en 20) au format du demi-connecteur d'embase désiré (partie isolante); dans cette empreinte est logé à demeure un porte-languettes, ou un porte-clips (ou un hybride des deux, en tout cas homologue du demi-connecteur choisi pour le faisceau de câbles correspondant). Ici, on utilise par exemple une partie de l'ensemble connecteur de câble à 15 voies vendu par la Société AMP sous les références 363035 (porte-languettes), 363039-2 (porte-clips), ainsi que 962061/962067 (habillages). Typiquement, l'embase moulée présentera la forme du demi-connecteur AMP 962061, complémentaire du demi-connecteur AMP 962067. Tout autre connecteur 15 voies étanche pourra aussi être considéré.

En partie intermédiaire gauche, se trouvent deux broches 30-1 et 30-2 destinées à une liaison directe ou indirecte au demi-connecteur 30 d'un faisceau de câbles allant vers le moteur du pulseur. Ce connecteur est par exemple le modèle de dimensions 2,8 x 0,8 mm vendu par la société CONNECTRAL sous la référence 7703297302, ou équivalents.

En partie basse, on prévoit avantageusement deux autres paires de broches 40-1 et 40-2 ainsi que 50-1 et 50-2 pour les demi-connecteurs 40 et 50, respectivement, qui peuvent être les modèles vendus par la Société CONNECTRAL sous les références 7703297303 et 7703297304, ou équivalents.

Tous ces connecteurs sont détrompés mécaniquement et éventuellement visuellement.

On s'intéressera maintenant à la partie arrière de la plaque, également visible sur la figure 2A.

Dans le mode de réalisation représenté, les parties arrière des broches 20-9 à 20-12 du connecteur multi-voies forment également des broches 60-4 à 60-1 respectivement, entre lesquelles sont montées un coupe-circuit thermique TH ainsi qu'une résistance R3, puis une résistance R2, et enfin une résistance R1. Bien qu'elles soient à l'arrière (donc non visibles), ces résistances sont également illustrées sur la figure 2, pour permettre une compréhension globale.

Des résistances de différentes technologies peuvent être utilisées. Ainsi, si l'on utilise des résistances céramiques, celles-ci peuvent être directement connectées aux broches 60-1 à 60-4, ou même encliquetées dans les broches du connecteur 15 voies situé de l'autre côté. Dans le cas de résistances bobinées, celles-ci seront fixées par sertissage sur des lamelles métalliques assurant le transfert électrique (mise en échelle série) et les connexions voulues.

Le résultat de l'actionnement des commandes comprises dans l'unité 25 est fourni notamment sous la forme d'une tension électrique qui est appliquée à l'un des conducteurs associés aux broches 20-9 à 20-12 (dans l'exemple décrit), pour définir lesquelles des résistances sont mises en série sur le pulseur d'air. On utilisera tout ou partie des résistances, selon le nombre de régimes différents désirés pour le pulseur d'air.

De même, par d'autres broches du connecteur 20, le bloc de connexion 10 transmet des informations électriques à l'unité de commande 25, pour traitement par celle-ci.

Vers le bas et à droite, sont encore prévues quatre broches ici tournées vers l'arrière, 70-1 à 70-4, destinées à la fixation par l'arrière d'un relais étanche 70, qui peut être par exemple le modèle RL1 SIEMENS 75039094.

Avec cette disposition de base, il devient possible, quel que soit le niveau de l'équipement du véhicule en matière d'installation de chauffage/climatisation, d'utiliser des liaisons centralisées et standard entre les différents éléments de cette installation.

On remarquera par ailleurs que des liaisons électriques sont incorporées à la plaque de connexion 10.

Dans la version décrite, les broches 20-4 à 20-7 sont respectivement reliées aux broches 40-1, 40-2, 50-1 et 50-2. Ces liaisons forment des court-circuits permettant que les signaux prélevés au niveau de la sonde d'évaporateur, dans un sens, et la commande du micromoteur, en sens inverse, passent entre le connecteur 20 relié à l'unité de commande 25 (figure 1) et les connecteurs 40 (un actionneur) et 50 (un capteur). Bien entendu, cette disposition peut s'étendre à un nombre plus élevé de capteurs ou actionneurs, si nécessaire, remarque étant faite que des broches restent libres sur le connecteur multi-voies 20, de même que de la place pour passer des interconnexions supplémentaires.

La broche 30-2 du connecteur 30 de pulseur est reliée à au moins une broche du connecteur multi-voies, ici à deux broches, respectivement 20-13 et 20-14. Ces deux broches reçoivent de l'unité de commande l'une des polarités de la tension batterie, par exemple V-. Deux autres broches du connecteur multi-voies, ici 20-1 et 20-8, reçoivent l'autre borne de la tension batterie, notée V+.

Enfin, les bornes 20-9 à 20-12 du connecteur multi-voies 20 sont utilisées de la manière suivante : l'une d'entre elles reçoit la tension positive de l'unité de commande 25, pour appliquer celle-ci à la broche 30-1 du demi-connecteur 30, par la plage conductrice P1.

Ce qui vient d'être décrit convient pour une installation avec climatisation, mais sans commande du pulseur d'air par un relais.

Lorsqu'une telle commande est nécessaire, le relais 70 est implanté à l'arrière sur les broches 70-1 à 70-4. L'une des tensions d'alimentation amenée par le demi-connecteur 20 est portée à l'une des extrémités de la bobine 71 du relais, tandis que son autre extrémité est reliée à l'une des broche du demi-connecteur 20, ici la broche 20-15. Le contact du relais est d'une part relié aux broches 20-8 et/ou 20-1, d'autres part, en position fermée, reliée à la broche 30-1.

Ce montage permet de forcer le fonctionnement du pulseur d'air à plein régime, par exemple pour un mode de climatisation automatique. Le relais peut être assorti d'une diode de "roue libre" montée en inverse. En variante, il peut être implanté sur la face avant de la plaque 10.

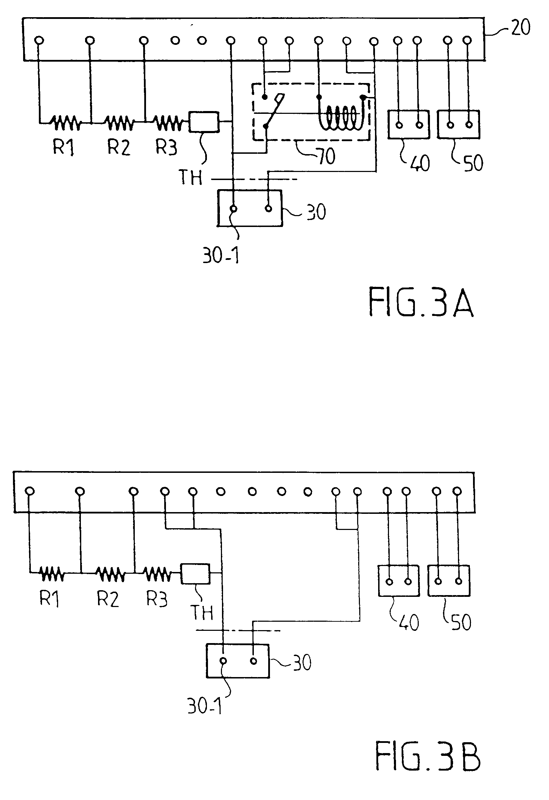

La figure 3A correspond, en schéma simplifié, aux interconnexions réalisées dans le schéma de la figure 2.

La figure 3B montre, en schéma de même type, comment transformer le bloc connecteur, en l'absence de relais: la borne 30-1 du pulseur est maintenant reliée aux deux bornes du connecteur 20 qui restaient libres sur la figure 3A, et reçoivent la tension maximum issue de l'unité de commande/contrôle 25. Il y a donc compatibilité totale du câblage du connecteur 20.

De même, si certaines options d'équipement ne nécessitent pas quatre vitesses de pulseur, il suffit d'intervenir en conséquence dans la liaison entre la commande de ces vitesses et ceux des câbles arrivant au connecteur 20 qui vont vers l'échelle résistive, pour choisir seulement les niveaux de valeurs désirées de résistance.

Le bloc de connexion ainsi proposé peut être réalisé de plusieurs manières :
- il peut tout d'abord être constitué comme une plaque multi-épaisseur, logeant des broches qui sortent seulement du côté voulu, avec les interconnexions entre les broches réalisées totalement dans l'épaisseur de la plaque. Ceci permet d'accéder à l'excellente étanchéité désirée.
- en variante, il est possible de réaliser les interconnexions du côté avant de la plaque, c'est-à-dire du côté face avant de la plaque (où prennent place les ensembles montés de connecteurs) tandis que la face arrière qui comprend l'échelle résistive et le cas échéant le relais restent totalement étanches. L'isolation électrique et l'étanchéité avant peuvent alors être obtenues par tout type de couvercle ou d'enduit d'isolation approprié, respectant les passages de connexion voulus.

Technologiquement, les liaisons peuvent être réalisées soit en circuit imprimé, soit avec des plages conductrices découpées à la matrice et serties dans un support approprié, éventuellement tenues au moins en partie par le sertissage ou autre fixation des broches ou plots, soit encore par des lamelles conductrices noyées dans la masse de la plaque, par exemple.

L'ensemble est isolé électriquement de manière appropriée; en particulier, on prévoira tout moyen peur éviter les risques de court-circuit entre broches ou plots, et/ou entre les circuits et des broches ou plots.

Le support ou embase de la plaque 10 est constitué d'un matériau possédant de bonnes qualités d'isolation électrique, et porte l'ensemble des demi-connecteurs décrits (partie isolante et conducteurs) avec leur détrompage, les résistances, et éventuellement le relais. Les parties isolantes des demi-connecteurs peuvent être moulées sur l'embase, ou fixées de manière étanche à celle-ci par tout moyen approprié.

Aux résistances s'ajoute en principe l'organe TH formant coupe-circuit thermique, du côté de la connexion au pulseur. Un joint d'étanchéité est prévu sur le pourtour de ce support, là où il "accoste" à son emplacement de fixation sur l'installation de chauffage et/ou climatisation.

Bien entendu, le nombre et la disposition des plots conducteurs qui ne sont pas dépendants de demi-connecteurs standard de câble pourront être modifiés. Par exemple, il n'est pas nécessaire que les plots (60-1 à 60-4) de l'échelle résistive soient des prolongements arrière des broches du connecteur 20. Ils peuvent être disposés à distance, et convenablement reliés aux broches correspondantes du connecteur 20, comme c'est illustré dans le cas du relais 70.

En outre, on pourra doubler l'un au moins des plots de liaison au pulseur, les deux éléments du plot doublé étant reliés à la même borne du pulseur. Ceci donne un trio de plots ou une double paire de plots.

Plus généralement, le positionnement des demi-connecteurs standard et l'allure des interconnexions pourront varier en fonction du choix de l'échelle résistive, et, le cas échéant, du relais. Par ailleurs, bien qu'il soit actuellement jugé préférable de placer des demi-connecteurs sur la plaque 10, il est envisageable de remplacer certains au moins de ces connecteurs par des branchements directs de fils, ces connecteurs étant éventuellement reportés à un autre endroit.

## Revendications

1. Dispositif de connexion pour une installation de chauffage et/ou climatisation à bord d'une automobile, comportant un pulseur d'air (PA) avec ses conduits, ainsi qu'un combiné de commande (25) et une échelle résistive de puissance (60) pour régler le régime du pulseur d'air, ledit dispositif comprenant des liaisons électriques entre le combiné de commande, le pulseur et l'échelle résistive,
caractérisé en ce qu'il comprend une plaque (10), susceptible d'être montée à étanchéité périmétrique sur une paroi de conduit de l'installation (PA), en ce que la face arrière de la plaque (10), située côté intérieur du conduit, comporte un jeu de N plots pour la liaison à l'échelle résistive de puissance (60), en ce que la face avant de la plaque comprend au moins deux plots (30-1,30-2) pour le branchement aux deux bornes du pulseur, et un jeu de broches (20-1 à 20-15) agencées en demi-connecteur multi-voies standard pour recevoir un faisceau électrique de commande/contrôle à relier audit combiné (25), et en ce que la plaque loge également des interconnexions prédéfinies entre broches et plots, ces interconnexions comprenant des liaisons, avec traversée étanche de la plaque, entre les plots (60-1 à 60-4) de l'échelle résistive et des broches respectives (20-9 à 20-12) du demi-connecteur multi-voies, ainsi que des liaisons des plots d'alimentation du pulseur (30-1,30-2) respectivement avec un plot extrême (60-4) de l'échelle résistive et avec au moins une broche (20-13,20-14) du demi-connecteur multi-voies.

2. Dispositif selon la revendication 1, caractérisé en ce que l'échelle résistive (60) comprend des résistances de valeur standard montées, étanches, sur la face arrière de la plaque.

3. Dispositif selon l'une des revendications 1 et 2, caractérisé en ce que la face avant de la plaque comprend au moins une paire complémentaire (40-1,40-2;50-1,50-2) de broches, également reliées à des broches du demi-connecteur multi-voies, et prévues pour la liaison vers au moins un capteur ou actionneur.

4. Dispositif selon la revendication 3, caractérisé en ce que la face avant de la plaque comprend deux paires complémentaires de broches (40-1,40-2;50-1,50-2), formant deux demi-connecteurs complémentaires susceptibles d'être reliés respectivement à un micromoteur de volet répartiteur et à une sonde d'évaporateur.

5. Dispositif selon l'une des revendications précédentes, caractérisé en ce que les plots (30-1,30-2) de branchement au pulseur sont également agencés en demi-connecteur.

6. Dispositif selon l'une des revendications précédentes, caractérisé en ce qu'il comporte en outre au moins trois plots (70-1 à 70-4) pour liaison aux deux bornes d'enroulement d'un relais (70) ainsi qu'à au moins un pôle de contact de ce relais, et en ce que lesdites interconnexions comprennent en outre des liaisons entre ces plots de relais et des broches du demi-connecteur multi-voies, ainsi qu'une liaison entre l'autre extrémité du contact et l'un des plots de pulseur, ce qui permet l'actionnement par relais du pulseur.

7. Dispositif selon la revendication 6, caractérisé en ce que les plots de relais (70-1 à 70-4) traversent la plaque à étanchéité, tandis que le relais (70) est monté, étanche, sur la face arrière de la plaque.

8. Dispositif selon la revendication 6, caractérisé en ce que le relais (70) est monté sur la face avant de la plaque.

9. Dispositif selon l'une des revendications précédentes, caractérisé en ce que le demi-connecteur multi-voies (10) comprend de 11 à 18 voies, de préférence 15 voies.

10. Dispositif selon l'une des revendications précédentes, caractérisé en ce que les interconnexions sont au moins en partie réalisées dans l'épaisseur de la plaque.

11. Dispositif selon l'une des revendications précédentes, caractérisé en ce que les interconnexions sont au moins en partie réalisées du côté avant de la plaque.

## Claims

1. Connection device for a heating and/or air- conditioning installation on board a motor vehicle, having an air blower (PA) with its conduits, and a control unit (25) and a resistive power dial (60) for adjusting the running of the air blower, the said device comprising electrical connections between the control unit, the blower and the resistive dial,
characterised in that it comprises a plate (10), able to be mounted with a perimeter seal on a wall of a conduit in the installation (PA), in that the rear face of the plate (10), situated on the inside of the conduit, has a set of N studs for connection to the resistive power dial (60), in that the front face of the plate comprises at least two studs (30-1, 30-2) for connection to the two terminals of the blower, and a set of pins (20-1 to 20-15) arranged as a standard multiway half-connector for receiving an electrical control/monitoring cable for connecting to the said unit (25), and in that plate also houses predefined interconnections between pins and studs, these interconnections comprising connections, with sealed passage through the plate, between the studs (60-1 to 60-4) of the resistive dial and respective pins (20-9 to 20-12) on the multiway half-connector, as well as connections of the supply studs for the blower (30-1, 30-2) respectively with an end stud (60-4) of the resistive dial and with at least one pin (20-13, 20-14) on the multiway half-connector.

2. Device according to Claim 1, characterised in that the resistive dial (60) comprises resistors of standard value mounted sealingly on the rear face of the plate.

3. Device according to one of Claims 1 and 2, characterised in that the front face of the plate comprises at least one complementary pair (40-1, 40-2; 50-1, 50-2) of pins, also connected to pins of the multiway half-connector, and provided for connection to at least one sensor or actuator.

4. Device according to Claim 3, characterised in that the front face of the plate comprises two complementary pairs of pins (40-1, 40-2; 50-1, 50-2), forming two complementary half-connectors able to be connected respectively to a distribution flap micromotor and to an evaporator probe.

5. Device according to one of the preceding claims, characterised in that the studs (30-1, 30-2) for connection to the blower are also arranged as a half-connector.

6. Device according to one of the preceding claims, characterised in that it also has at least three studs (70-1 to 70-4) for connection to the two winding terminals of a relay (70) and to at least one contact pole on this relay, and in that the said interconnections also comprise connections between these relay studs and pins on the multiway half-connector, and a connection between the other end of the contact and one of the studs on the blower, which enables the blower to be actuated by relay.

7. Device according to Claim 6, characterised in that the relay studs (70-1 to 70-4) pass through the plate sealingly, whilst the relay (70) is mounted sealingly on the rear face of the plate.

8. Device according to Claim 6, characterised in that the relay (70) is mounted on the front face of the plate.

9. Device according to one of the preceding claims, characterised in that the multiway half-connector (10) comprises eleven to eighteen ways, preferably fifteen ways.

10. Device according to one of the preceding claims, characterised in that the interconnections are at least partly produced in the thickness of the plate.

11. Device according to one of the preceding claims, characterised in that the interconnections are at least partly produced on the front side of the plate.

## Patentansprüche

1. Verbindungsvorrichtung für eine Heizungs- und/oder Klimaanlage in einem Kraftfahrzeug, umfassend ein Luftgebläse (PA) mit seinen Leitungen sowie ein Kombisteuerinstrument (25) und eine Leistungswiderstandsstufe (60) zur Regelung der Leistung des Luftgebläses, wobei die besagte Vorrichtung elektrische Verbindungen zwischen dem Kombisteuerinstrument, dem Luftgebläse und der Widerstandsstufe umfaßt,
**dadurch gekennzeichnet,** daß sie eine Platte (10) umfaßt, die umfangsmäßig dicht an einer Leitungswand der Anlage (PA) eingebaut werden kann, daß die auf der Innenseite der Leitung angeordnete Rückseite der Platte (10) einen Satz von N Kontaktstücken für die Verbindung mit der Leistungswiderstandsstufe (60) umfaßt, daß die Vorderseite der Platte mindestens zwei Kontaktstücke (30-1, 30-2) für den Anschluß an zwei Klemmen des Gebläses und einen Satz von Anschlußstiften (20-1 bis 20-15) umfaßt, die als Standard-Mehrwege-Teilverbinder angeordnet sind, um einen elektrischen Steuerungs-/Kontrollkabelstrang aufzunehmen, der mit dem Kombisteuerinstrument (25) zu verbinden ist, und daß die Platte außerdem vordefinierte Zwischenanschlüsse zwischen Anschlußstiften und Kontaktstücken enthalt, wobei diese Zwischenanschlüsse mit dichter Durchführung durch die Platte ausgeführte Verbindungen zwischen den Kontaktstücken (60-1 bis 60-4) der Widerstandsstufe und den jeweiligen Anschlußstiften (20-9 bis 20-12) des Mehrwege-Teilverbinders sowie Verbindungen der Kontaktstücke für die Stromversorgung des Gebläses (30-1, 30-2) mit einem Endkontaktstück (60-4) der Widerstandsstufe und mit mindestens einem Anschlußstift (20-13, 20-14) des Mehrwege-Teilverbinders umfassen.

2. Vorrichtung nach Anspruch 1 , **dadurch gekennzeichnet,** daß die Widerstandstufe (60) Widerstände mit Standardwert umfaßt, die dicht auf der Rückseite der Platte angebracht sind.

3. Vorrichtung nach einem der Ansprüche 1 und 2, **dadurch gekennzeichnet,** daß die Vorderseite der Platte mindestens ein komplementäres Paar (40-1, 40-2; 50-1, 50-2) von Anschlußstiften umfaßt, die ebenfalls mit Anschlußstiften des Mehrwege-Teilverbinders verbunden und für die Verbindung mit mindestens einem Sensor oder Stellglied vorgesehen sind.

4. Vorrichtung nach Anspruch 3 , **dadurch gekennzeichnet,** daß die Vorderseite der Platte zwei komplementäre Paare von Anschlußstiften (40-1, 40-2; 50-1, 50-2) umfaßt, die zwei komplementäre Teilverbinder bilden, die mit einem Verteilerklappen-Kleinstmotor bzw. mit einem Verdampferfühler verbunden werden können.

5. Vorrichtung nach einem der vorangehenden Ansprüche, **dadurch gekennzeichnet**, daß die Kontaktstücke (30-1, 30-2) für den Anschluß an das Gebläse ebenfalls als Teilverbinder angeordnet sind.

6. Vorrichtung nach einem der vorangehenden Ansprüche, **dadurch gekennzeichnet**, daß sie außerdem mindestens drei Kontaktstücke (70-1 bis 70-4) für die Verbindung mit zwei Wicklungsklemmen eines Relais (70) sowie mit mindestens einem Kontaktpol dieses Relais umfaßt und daß die besagten Zwischenanschlüsse außerdem Verbindungen zwischen diesen Relaiskontaktstücken und Anschlußstiften des Mehrwege-Teilverbinders sowie eine Verbindung zwischen dem anderen Ende des Kontakts und einem der Kontaktstücke des Gebläses umfassen, wodurch die Relaisbetätigung des Gebläses ermöglicht wird.

7. Vorrichtung nach Anspruch 6 , **dadurch gekennzeichnet,** daß die Relaiskontaktstücke (70-1 bis 70-4) dicht durch die Platte hindurchgehen, während das Relais (70) dicht auf der Rückseite der Platte angebracht ist.

8. Vorrichtung nach Anspruch 6 , **dadurch gekennzeichnet,** daß das Relais (70) auf der Vorderseite der Platte angebracht ist.

9. Vorrichtung nach einem der vorangehenden Ansprüche, **dadurch gekennzeichnet**, daß der Mehrwege-Teilverbinder (10) 11 bis 18 Anschlußwege, vorzugsweise 15 Anschlußwege, umfaßt.

10. Vorrichtung nach einem der vorangehenden Ansprüche, **dadurch gekennzeichnet**, daß die Zwischenanschlüsse zumindest teilweise in der Dicke der Platte ausgeführt sind.

11. Vorrichtung nach einem der vorangehenden Ansprüche, **dadurch gekennzeichnet**, daß die Zwischenanschlüsse zumindest teilweise auf der Vorderseite der Platte ausgeführt sind.
